# EUROPEAN PATENT APPLICATION

(11) **EP 1 811 163 A2**
(43) Date of publication of application: **25.07.2007**
(21) Application number: 07250189.3
(22) Date of filing: 18.01.2007
(51) Int. Cl.: F02K 9/64, F02K 9/82

(54) **Gas augmented rocket engine**

(30) Priority: 19.01.2006 US 334965
(71) Applicant: UNITED TECHNOLOGIES CORPORATION, Hartford, CT 06101 (US)
(72) Inventor: Brown, William S., Newbury Park California 91320 (US); Schilhavy, Peter A., Thousand Oaks California 91361 (US)
(74) Representative: Leckey, David Herbert

(57) **Abstract**

A rocket engine with an augmentation gas system (24) that improves performance of the hypergolic combustion process. The augmentation gas system (24) includes an acoustic cavity manifold (30) mounted between an outer perimeter (34) of an injector face (36) and the combustion chamber (12). The augmentation gas system (24) injects an augmentation gas active element such as hydrogen or an inactive element such as helium to provide significantly enhanced boundary layer coolant effect to reduce heat loading on the combustion chamber wall and enhance the specific impulse of the rocket engine.

## Description

### BACKGROUND OF THE INVENTION

The present invention relates to a rocket engine, and more particularly to a gas augmented divert and attitude control thruster having increased specific impulse efficiency with enhanced chamber nozzle boundary layer coolant effects.

A hypergolic rocket engine typically utilizes two propellants, usually an oxidizer such as Nitrogen Tetroxide (NTO) and a fuel, such as Monomethylhydrazine (MMH), which are injected into a combustion chamber and auto-ignite to provide reliable, efficient performance and thrust. Hypergolic rocket engines are often utilized as divert and attitude control thrusters for various vehicles.

Divert and attitude thrusters are fired on demand for divert maneuvers and attitude control, and are capable of steady-state or pulse-mode operation. An increase in the specific impulse efficiency permits relatively smaller rocket nozzles to be utilized and a corresponding reduction in the size of the propellant tank as less propellant is required to produce equivalent maneuverability. The propellant savings result in decreased payload weights, relatively smaller overall vehicle size and a decreased demand on the booster stages which lift the vehicle. All of these enhancements are critical to mid-course or boost phase intercept missions for missile defense or space based operations.

Any increase in the specific impulse efficiency, however, must not significantly compromise the performance of the hypergolic impingement system or significantly increase the heat loading of the thruster combustion chamber as such compromise could potentially negate the advantage provided by the increased specific impulse efficiency.

Accordingly, it is desirable to provide a high performance attitude and divert thruster with increased specific impulse efficiency without significantly increasing the combustion system heat loading or compromising the hypergolic impingement system performance.

### SUMMARY OF THE INVENTION

A rocket engine according to an embodiment the present invention provides an augmentation gas system which improves performance of a hypergolic combustion process. The augmentation gas system injects an augmentation gas from an augmentation gas tank into a combustion chamber through an acoustic cavity manifold mounted between an injector face circumference defined by an injector assembly and the combustion chamber. The augmentation gas may be an active element such as hydrogen or an inactive element such as helium.

The acoustic cavity manifold injects the augmentation gas into the combustion chamber to form a boundary layer between the hypergolic thruster combustion gas flow and the chamber wall to reduce heat loading on the combustion chamber wall. The augmentation gas is introduced through the acoustic cavity manifold along a flow vector in line with the combustion chamber wall to provide an optimized boundary layer transition which decreases the requirements for dedicated liquid fuel boundary layer coolant and permits a greater percentage of the hypergolic fuel to be used in the hypergolic combustion process.

The augmentation gas expands as the flow passes a chamber throat and enters a chamber nozzle. The expansion provides an increase in nozzle performance as the augmentation gas becomes superheated and rapidly expands. The expansion properties in the supersonic flow of the nozzle enhance the specific impulse of the engine which permits relatively smaller nozzles to be utilized with a corresponding reduction in propellant tank size.

The augmentation gas does not compromise the performance of the hypergolic bi-propellant impingement system as segregation of the augmentation gas through the acoustic cavity manifold permits augmentation gas introduction without interference with the feed system characteristics of the hypergolic propellants.

The gas augmentation system includes an augmentation gas valve actuation system integrated with an existing bi-propellant valve system of a bi-propellant supply system such that separate external controls need not be required. Linking the bi-propellant valve system to the augmentation gas system readily permits the synchronized introduction of augmentation gas to enhance engine thrust during pulse and steady state operations without separate feed system controls that may otherwise be prohibitively complicated.

The present invention therefore provides a high performance attitude and divert thruster with increased specific impulse efficiency which does not significantly increase the combustion system heat loading or compromise the hypergolic impingement system performance.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1A is a general sectional view an exemplary rocket engine typical of a divert and attitude control thruster embodiment for use with the present invention;
Figure 1B is a facial view of the injector face of the rocket engine of Figure 1A;
Figure 1C is a close-up view of the gas augmentation feed system of the exemplary rocket engine;
Figure 2 is a perspective partial sectional view of an acoustic cavity manifold of the present invention;
Figure 3A is a sectional view schematically illustrating a boundary layer between the hypergolic combustion gas flow and a combustion chamber wall;
Figure 3B is an expanded view schematically illustrating the boundary layer generated by the acoustic cavity manifold;
Figure 4A is a block diagram of one bi-propellant valve system for use with the acoustic cavity of the present invention; and
Figure 4B is a block diagram of one bi-propellant valve system for use with the acoustic cavity of the present invention in an integrated rocket engine.

### DETAILED DESCRIPTION OF THE PREFERRED EMBODIMENT

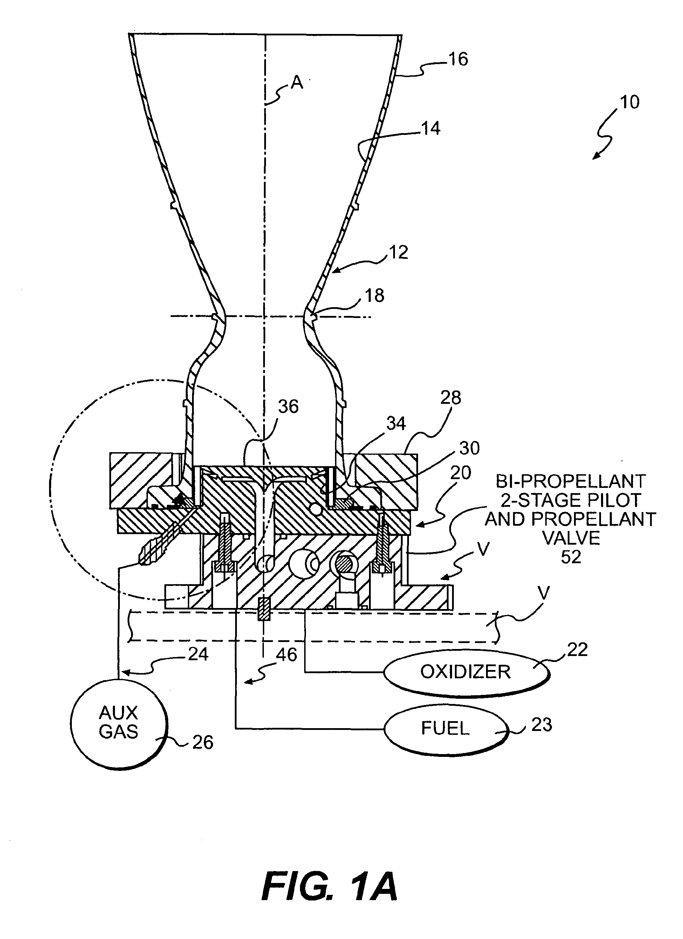

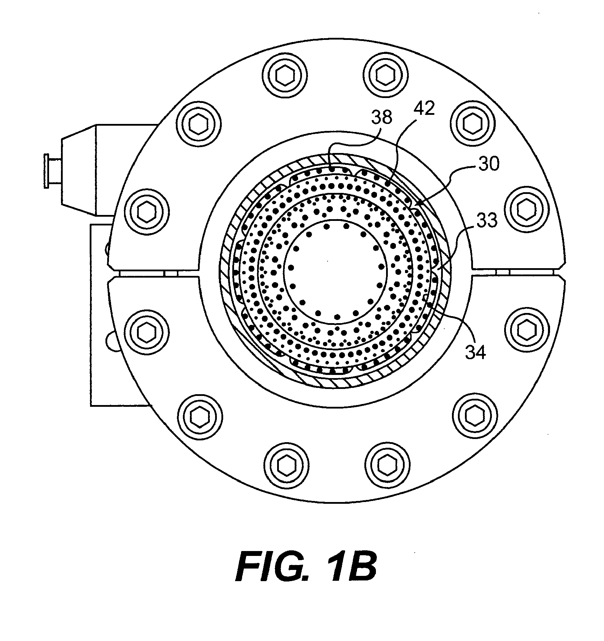

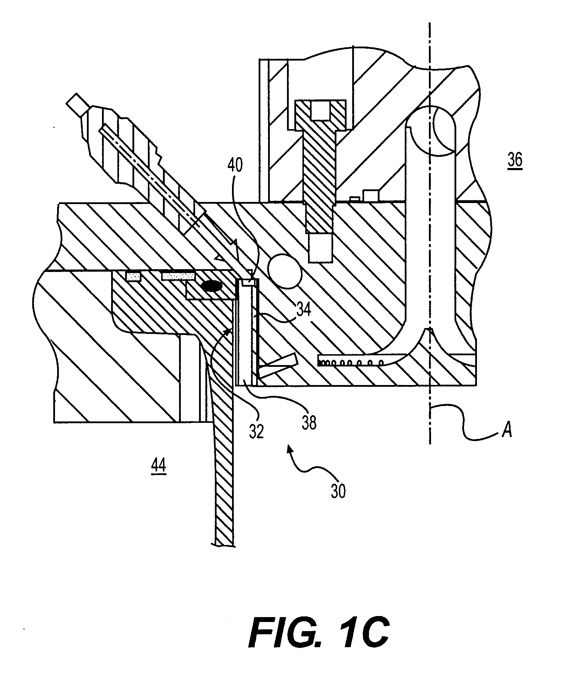

Figure 1 illustrates a partial schematic sectional view of a rocket engine 10 typical of divert and attitude control thrusters for a high performance vehicle such as a kinetic energy interceptor (KEI). It should be understood that although the engine 10 will be described with reference to hypergolic rocket engines, other rocket engines will also benefit from the instant invention.

The engine 10 generally includes a combustion chamber 12 defined by a combustion chamber wall 14 about a thrust axis A. The combustion chamber wall 14 defines a combustion chamber nozzle 16 and a combustion chamber throat 18 along the thrust axis A.

The combustion chamber 12 is mounted to an injector assembly 20. A mount 28 retains the combustion chamber 12 to the injector assembly 20 which is mounted to the bi-propellant two-stage valve 52 which in turn is mounted to the vehicle structure V (illustrated schematically). The valve and injector assembly 20 communicates an oxidizer such as Nitrogen Tetroxide (NTO) from an oxidizer tank (illustrated schematically at 22), and a fuel such as Monomethylhydrazine (MMH) from a fuel tank (illustrated schematically at 23) through a bi-propellant feed system 46 to the combustion chamber 12. The two propellants are injected into the combustion chamber 12 and auto-ignite to provide reliable, efficient performance and thrust.

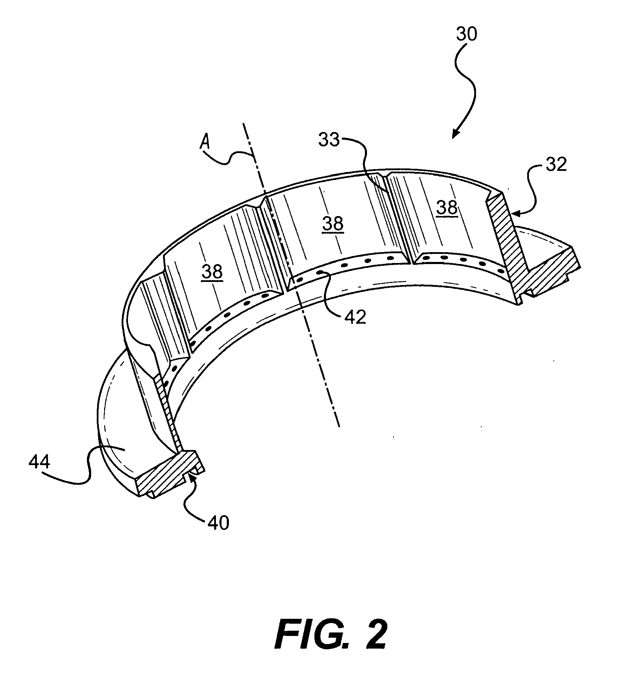

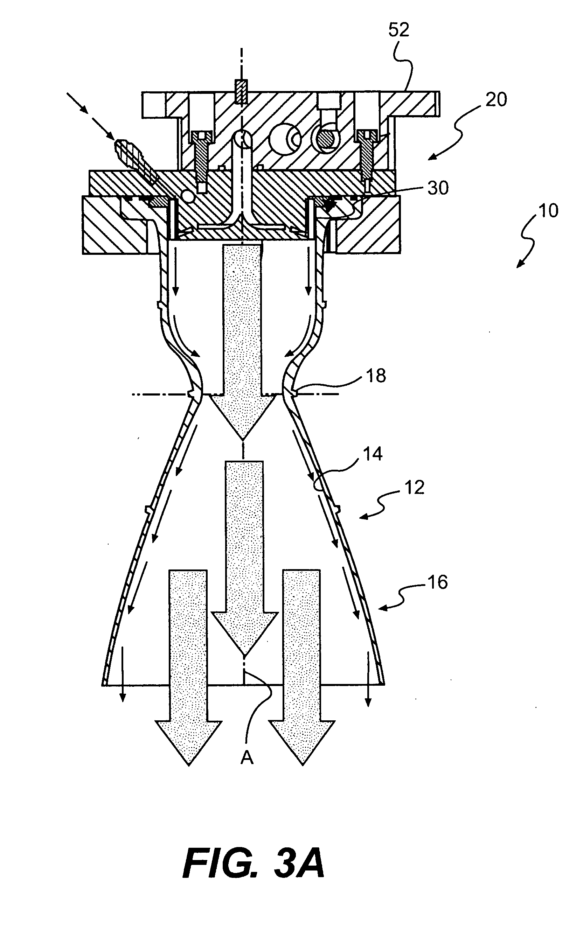

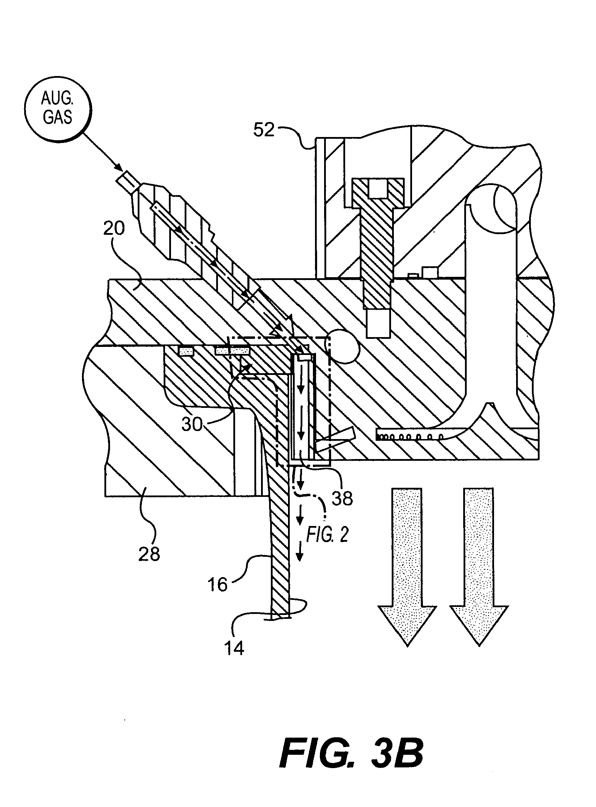

An augmentation gas supply system 24 injects an augmentation gas from an augmentation gas tank (illustrated schematically at 26) into the combustion chamber 12 through the injector assembly 20. The augmentation gas system 24 includes an acoustic cavity manifold 30 (Figure 2) mounted between an injector outer perimeter 34 of an injector face 36 (also illustrated in Figure 1B) defined by the injector assembly 20 and the combustion chamber 12 to stabilize thruster operation. It should be understood that various structural arrangements for various vehicles may be utilized with the instant invention and need not be further detailed herein. It should be still further understood that various acoustic cavity manifold will benefit from the present invention.

Referring to Figure 2, the acoustic cavity manifold 30 includes a generally cylindrical body 32 that defines a multitude of axially extending acoustic cavities 38. The multitude of axially extending acoustic cavities 38 are define by a multitude of radially extending ribs 33 which extend toward a central axis A.

The acoustic cavity manifold 30 defines an augmentation gas distribution manifold 40 that communicates with a multitude of augmentation gas openings 42 located within each of the acoustic cavities 38. That is, the augmentation gas distribution manifold 40 is located on one axial side of a radially extending acoustic cavity manifold ring 44 that extends from the generally cylindrical body 32 to communicates the augmentation gas from the acoustic cavity manifold ring 40 to all of the multitude of augmentation gas openings 42 on the opposite axial side of the acoustic cavity ring 44. The augmentation gas distribution manifold 40 is preferably a single circumferential channel which receives the augmentation gas from the augmentation gas tank feed system 24 and distributes the augmented gas evenly around the acoustic cavity manifold 40. It should be understood that various augmentation gas feed systems will be usable with the present invention. The acoustic cavities 38 and the multitude of augmentation gas openings 42 distribute the augmentation gas into the combustion chamber 12 about the injector face adjacent the combustion chamber wall 14.

In one embodiment, the acoustic cavity manifold 30 has forty-five (45) augmentation gas openings 42 distributed evenly within nine (9) acoustic cavities 38. It should be understood that the number of acoustic cavities 38 and openings 42 will depending on the engine configuration, however, the concept applies equally.

The multitude of axially extending acoustic cavities 38 are defined about the injector outer perimeter 34. The multitude of ribs 33 extend from the cylindrical body 32 and into contact with the injector outer perimeter 34 to compartmentalize the space therebetween and define the multitude of axially extending acoustic cavities 38 (Figure 1B and 1C).

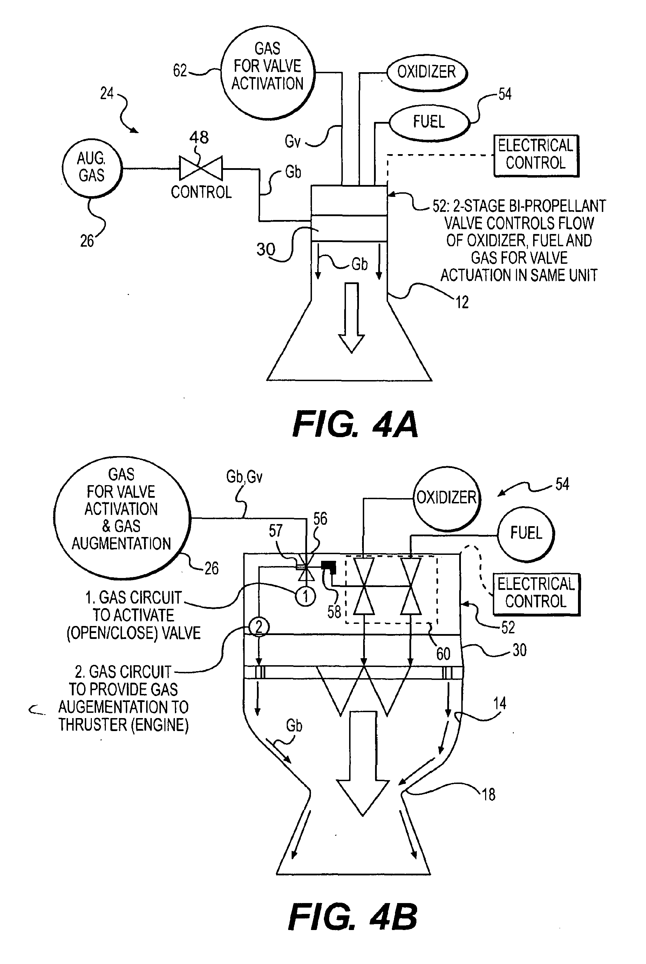

Referring to Figure 4A, the acoustic cavity manifold 30 injects the augmentation gas into the combustion chamber 12 to form a boundary layer between the hypergolic combustion gas flow and the chamber wall 14. Gas augmentation of the hypergolic rocket propellants with an active element such as hydrogen improves performance of the combustion process by burning hydrogen with the hypergolic combustion process to increases the combustion efficiency. Utilizing hydrogen -- or even an inactive element such as helium -- provides a significantly enhanced boundary layer coolant effect, reducing heat loading on the chamber wall 14.

Heretofore, a dedicated amount of fuel coolant had been distributed along the chamber wall to conventionally provide relief from combustion heat loads. This conventional method of chamber cooling results in less than optimum mixing efficiency and less then ideal combustion efficiency. Injecting the more efficient augmentation gas (hydrogen or helium) along the chamber wall 14 (Figure 3B) decreases or eliminates the need for dedicated liquid fuel (MMH) boundary layer coolant which permits a greater percentage or all of the hypergolic fuel to be used directly in the hypergolic combustion process.

The augmentation gas layer expands as the flow passes the chamber throat 18 and enters the nozzle 16. Expansion through the nozzle 16 provides an increase in nozzle performance as the augmentation gas becomes superheated and expands rapidly. The expansion properties in the supersonic flow of the nozzle 16 enhances the specific impulse by approximately 10-15 seconds of specific impulse (Isp). Increasing the specific impulse efficiency permits a smaller rocket nozzle and a corresponding reduction in the vehicle propellant tank size due to less propellant usage for equivalent thrust. The propellant savings results in decreased payload weights, smaller overall vehicles and a decreased demand on the booster stages which lift the vehicle. All of these enhancements are critical to mid-course or boost phase intercept missions for missile defense or space based operations.

In addition, the method of gas augmentation injection does not compromise hypergolic impingement performance. The hypergolic impingement are streams which intersect each other and combust on contact in a central location within the combustion cavity 12. The segregation of the augmentation gas through the acoustic cavity manifold 30 provides for segregated injection of the augmentation gas. The introduction of the augmentation gas through the acoustic cavities 38 generates a flow vector in line with the combustion chamber wall thus providing optimal boundary layer transition. In other words, the augmentation gas forms an outer "sheath" which has a secondary effect of containing any stray hypergolic streams from hitting the combustion chamber wall and potentially burning through it. Because the augmentation gas is very compressible and the heat and pressure of hypergolic combustion very high, the augmentation gas is compressed against the combustion chamber and nozzle wall providing a boundary layer for the combustion products. While there may be some mixing with the hypergolic combustion, the hot gas temperature of combustion tends to cause the hydrogen or helium to expand and thus increase performance.

Referring to Figure 4A, the augmentation gas supply system 24 includes an augmentation gas introduction valve 48 linked with an existing bi-propellant valve system 52 of the bi-propellant supply system 54 such that separate external controls need not be required. It should be understood, however, that various valve systems will also be useable with the present invention.

In operation, engine ignition is initiated through operation of a valve activation gas Gv supplied from a valve activation gas supply 62. It should be understood that the Gv may alternatively be supplied by a helium or hydrogen supply separate from the augmentation gas supply tank 26. That is, the augmentation gas supply tank 26 is reserved for dedicated supply of the gas Gb utilized in the boundary layer between the hypergolic combustion gas flow and the chamber wall 14 with the separate helium or hydrogen valve activation gas supply 62 utilized for other vehicle operations as generally understood in order to properly control usage of the on-board gas supplies. Sources of helium are typically readily available either in post boost stages or in kill vehicles as both retain large sources of high pressure helium for tank expulsion and to drive gas actuated valves. Sources of hydrogen are typically available in kill vehicles which utilize cryo-cooled seeker systems.

Referring to Figure 4B, the augmentation gas supply 26 is utilized both as the gas Gv for operation of valves and other vehicle gas-driven operations as well as for supply of the gas Gb utilized for the boundary layer. The augmentation gas Gb is communicated to an electrically operated pilot valve 56 of the bi-propellant valve system 52 which is selectively operated by an electrical controller (illustrated schematically). The electrically operated pilot valve 56 is electrically actuated to selectively permit communication of the augmentation gas with a gas actuated valve power piston 58 which drives a main-stage valve 60 of the bi-propellant valve system 52. That is, the electrically operated pilot valve 56 controls gas flow which powers the gas actuated valve power piston 58 to operate the gas operated main stage valve 60 and selectively permit propellant flow through the bi-propellant valve system 52.

An augmentation gas introduction valve 57 integrated with the valve pilot system 56 is also preferably operated by the bi-propellant valve system 52. Operation of the integrated augmentation gas introduction valve 57 provides for the selective communication of the augmentation gas into the acoustic cavity manifold 30 concurrent to operation of the bi-propellant main stage valve 60 such that the augmentation gas is timed exactly with the introduction of the bi-propellants into the combustion chamber 12. This is critical as hypergolic thrusters are often utilized in a pulsed mode operation. Linking the bi-propellant valve system 52 and the augmentation gas to the pilot valve 56 readily permits the synchronized introduction of augmentation gas to enhance thruster operations during pulse and steady state operations without separate feed system controls which may otherwise be prohibitively complicated.

After the augmentation gas pilot valve 56 is opened, the augmentation gas is communicated through injector assembly 20 through any available area for a single feed passage (Figure 3B). That is, only a single feed passage need communicate with the augmentation gas distribution manifold 40 of the acoustic cavity manifold 30 for the augmentation gas to be distributed about the perimeter of the combustion chamber 12 through the acoustic cavities 38 and associated openings 42.

Preferably, the augmentation gas inlet pressure into the acoustic cavity manifold 30 is preferably 30% to 40% over the combustion chamber 12 pressure to preclude hypergolic combustion gas from back chugging into the augmentation gas system due to the potential for chamber pressure overshoot. This corresponds well with the gas pressure required to actuate the bi-propellant valve system 52 in normal operation. At this pressure, the augmentation gas velocity exiting the acoustic cavity manifold 30 will be approximately matched with the impinging element injector for the hypergolic propellants to achieve for a smooth transition to the combustion chamber hypergolic combustion gas flow.

The augmentation gas exits the acoustic cavities 38 of the acoustic cavity manifold 30 which are axially aligned to the profile of the combustion chamber 12 to facilitate a direct and smooth transition to the chamber boundary layer (Figures 3A and 3B). The boundary layer provides increased cooling capabilities which minimize or negate the need for fuel to be parasitically directed to the chamber wall as a coolant.

If the augmentation gas used is hydrogen then an added benefit of unused NTO combining with the hydrogen and burning is an increase to the combustion efficiency of the hypergolic propellants. If the gas used is helium or hydrogen, the expansion properties of these gases as they become superheated enhance and increase the performance of expansion within the nozzle. Applicant has determined through analysis an approximate 10 seconds increase to specific impulse given a mid-sized area ratio of 12:1. Furthermore, as higher area ratio nozzles are utilized this enhancement effect will become more pronounced. It should be understood that optimization for specific thrusters and vehicle missions will provide for the performance enhancement versus draw on the source gas can be fine tuned.

Elements of the gas augmentation system are preferably integral to existing thruster valve/injector configurations and do not require special materials. Gas augmentation can be utilized across all bi-propellant operating thrust levels whether smaller thrust attitude control or larger axial engines. Gas augmentation is also not limited to liquid hypergolic thrusters, and may be applied to gas, liquid, or solid rocket motor combustion chambers and nozzles to likewise enhance performance thereof.

It should be understood that relative positional terms such as "forward," "aft," "upper," "lower," "above," "below," and the like are with reference to the normal operational attitude of the vehicle and should not be considered otherwise limiting.

It should be understood that although a particular component arrangement is disclosed in the illustrated embodiment, other arrangements will benefit from the instant invention.

Although particular step sequences are shown, described, and claimed, it should be understood that steps may be performed in any order, separated or combined unless otherwise indicated and will still benefit from the present invention.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. An acoustic cavity manifold (30) for a rocket engine comprising:
a multitude of axially extending acoustic cavities (38) defined about a thrust axis (A);
a multitude of augmentation gas openings (42) in communication with each of said multitude of acoustic cavities (38); and
a circumferential distribution manifold (40) defined about said axis (A), said circumferential distribution manifold (40) in communication with each of said multitude of augmentation gas openings (42).

2. The manifold as recited in claim 1, wherein said circumferential distribution manifold (40) includes a circumferential channel (40) defined within a radially extending acoustic cavity manifold ring (44).

3. The manifold as recited in claim 2, wherein said radially extending acoustic cavity manifold ring (44) radially extends from a cylindrical body (32).

4. The manifold as recited in claim 3, wherein said multitude of axially extending acoustic cavities (38) are defined within an inner surface of said cylindrical body (32) and extend from said multitude of augmentation gas openings (42).

5. A rocket engine (10) comprising:
an injector assembly (20);
a combustion chamber (12) mounted to said injector assembly (20), said combustion chamber (12) defined about a thrust axis (A); and
an acoustic cavity manifold (30) mounted to said injector assembly (20), said acoustic cavity manifold (30) in communication with said combustion chamber (12).

6. The rocket engine as recited in claim 5, wherein said acoustic cavity manifold (30) is mounted about an outer perimeter (34) of an injector face (36) of said injector assembly (20).

7. The rocket engine as recited in claim 5, wherein said acoustic cavity manifold (30) includes a multitude of augmentation gas openings (42) directed along a combustion chamber wall.

8. The rocket engine as recited in claim 5, 6 or 7 wherein said acoustic cavity manifold (30) defines a multitude of axially extending acoustic cavities (38) defined about said thrust axis (A).

9. The rocket engine as recited in claim 8, wherein said multitude of axially extending acoustic cavities (38) are axially aligned with a combustion chamber wall of said combustion chamber (12).

10. The rocket engine as recited in any of claims 5 to 9, wherein said injector assembly (20) communicates an oxidizer and a fuel to said combustion chamber (12).

11. The rocket engine as recited in any of claims 5 to 10, further comprising a bi-propellant valve system (52) linked to an augmentation gas supply system (24) to provide for the synchronized introduction of augmentation gas, oxidizer and fuel into said combustion chamber (12).

12. The rocket engine as recited in claim 11, further comprising an augmentation gas introduction valve (57) of said augmentation gas supply system (24) driven by a valve power piston (58) of said bi-propellant valve system (52).

13. The rocket engine as recited in claim 12, further comprising a pilot valve (56) in communication with said augmentation gas, electrical operation of said pilot valve (56) operable to selectively communicate said augmentation gas to said valve power piston (58) which drives a bi-propellant main stage valve of said bi-propellant valve system (52).

14. The rocket engine as recited in claim 13, wherein operation of said valve pilot system permits selective communication of said augmentation gas to said acoustic cavity manifold (30) through said augmentation gas introduction valve (57).

15. A method of increasing the specific impulse efficiency of a rocket engine comprising the steps of:
(A) injecting an augmentation gas into a combustion chamber (12) through an acoustic cavity manifold (30) along a combustion chamber wall defined about a thrust axis (A).

16. A method as recited in claim 15, wherein said step (A) further comprises:
(a) generating a flow vector with the augmentation gas in-line with the combustion chamber wall; and
(b) providing an augmentation gas boundary layer transition between the combustion gas flow and the combustion chamber wall

17. A method as recited in claim 15 or 16, wherein said step (A) further comprises:
(a) injecting helium as the augmentation gas.

18. A method as recited in claim 15 or 16, wherein said step (A) further comprises:
(a) injecting hydrogen as the augmentation gas.

19. A method as recited in any of claims 15 to 18, wherein said step (A) further comprises:
(a) injecting the augmentation gas into the acoustic cavity manifold (30) at a pressure above a chamber pressure within the combustion chamber (12).

20. A method as recited in any of claims 15 to 19, further comprising the steps of:
(B) linking operation of a bi-propellant valve · system (52) to an augmentation gas introduction valve (57) to provide synchronized injection of the augmentation gas, an oxidizer and a fuel into the combustion chamber (12).
